# EUROPEAN PATENT SPECIFICATION

(11) **EP 2 663 446 B1**
(45) Date of publication and mention of the grant of the patent: **17.09.2014**
(21) Application number: 11805017.8
(22) Date of filing: 21.12.2011
(51) Int. Cl.: B29C 51/28, B65B 29/02, B29C 51/08, B29C 51/10, B29C 51/42, B29L 31/00, B29C 51/26, B29K 67/00, B65B 11/50, B65B 47/02

(54) **PROCESS FOR PRODUCING INFUSION PACKETS**
VERFAHREN ZUR HERSTELLUNG VON INFUSIONSPAKETEN
PROCÉDÉ POUR PRODUIRE DES SACHETS D'INFUSION

(30) Priority: 12.01.2011 EP 11150741
(43) Date of publication of application: 20.11.2013
(73) Proprietor: Unilever PLC, London EC4Y 0DN (GB); Unilever N.V., 3013 AL Rotterdam (NL)
(72) Inventor: HOWARTH, James, Robert, Stirling, Cambridge Cambridgeshire CB23 7EP (GB); WOODWARD, Adrian, Michael, Bury St Edmonds Suffolk IP32 7PG (GB)
(74) Representative: Askew, Sarah Elizabeth
(86) International application number: PCT/EP2011/073575
(87) International publication number: WO 2012/095247

(56) References cited:
- FR-A1- 2 165 776
- FR-A5- 2 069 808
- GB-A- 988 370
- JP-A- 5 024 104

## Description

### Technical field of the Invention

The present invention relates to the manufacture of packets, in particular to infusion packets such as tea bags having a pre-determined three-dimensional shape.

### Background to the Invention

For many years infusion packets, such as tea bags were available primarily as square or round two-ply sheets of porous filter material, typically made of paper, with the infusible material, such as tea, sandwiched between the sheets. Such packets restrict the flow of infusible material within the packet substantially to two dimensions. As a result the infusion performance of such packets is limited.

Thus the past few decades have seen the development of mass-produced infusion packets which have a more three-dimensional shape and which allow the infusible substance more room to move. Of particular success have been the tetrahedral-shaped packets such as those described in the international patent applications published as WO 95/01907 (Unilever) and WO 2004/033303 (I.M.A. SPA).

In the manufacture of tetrahedral packets, the tetrahedral shape is conventionally formed by making mutually perpendicular transverse seals in a tube of filter material and apparatus designed for such manufacture is ill-suited to the manufacture of other three-dimensional shapes.

Therefore, it would be desirable to develop a process which can manufacture infusion packet material into a variety of three-dimensional shapes.

JP 05/024,104 discloses a method for moulding a continuously foamed porous sheet material.

### Definitions

It should be noted that in specifying any range of values, any particular upper value can be associated with any particular lower value.

For the avoidance of doubt, the word "comprising" is intended to mean "including" but not necessarily "consisting of" or "composed of". In other words, the listed steps or options need not be exhaustive.

The disclosure of the invention as found herein is to be considered to cover all embodiments as found in the claims as being multiply dependent upon each other irrespective of the fact that claims may be found without multiple dependency or redundancy.

### Summary of the Invention

The inventors have realised that known thermoforming processes, whilst capable of generating a variety of three-dimensional shapes, are not suitable for use with infusion packet material.

Firstly, infusion packets are most commonly made of paper, which is not thermoformable. Secondly, even if they were made from a thermoformable material, they would be inappropriate for thermoforming due to their porosity and thinness of the material.

Known thermoforming techniques typically involve the use of air pressure to form the material. However, the porosity of infusion packet material makes this approach impractical, as any difference in air pressure across the material will quickly equalise.

If air pressure is not used, and a mould was pressed into the material then only a limited number of three-dimensional shapes could be formed due to the fragility of any porous and thin infusion packet material.

However, even if the problem of the fragility and porosity could be solved there are other more significant problems. Known thermoforming processes involve a first step of heating the material followed by a second step of thermoforming the material. Because infusion packet material is porous and very thin, it has a very small capacity to store heat. The very small heat capacity of infusion packet material means that any heating will quickly be lost and therefore thermoforming temperatures cannot be maintained for any useful length of time. Therefore this approach will not work.

For example, GB 739,436 and GB 899,646 disclose thermoforming materials comprising a first heating step followed by a thermoforming step. The processes disclosed are therefore inappropriate for use with infusion packet material, which will cool down before thermoforming can begin.

Thus, it would seem that thermoforming is not a practical method of generating a wide variety of three-dimensional shapes from infusion packet material.

However, surprisingly the present inventors have managed to solve the above problems and developed a thermoforming process that can produce a wide variety of three-dimensional shapes from infusion packet material.

Thus, the invention relates to a process for thermoforming a gas and liquid permeable layer of thermoplastic material having an average thickness of less than 0.50 mm, the process comprising the steps of bringing the layer into contact with a layer of deformable non-gas permeable material to form a separable laminate of the two materials, arranging for the thermoplastic material to be at a thermoformable temperature and thermoforming the separable laminate, thereby thermoforming the thermoplastic material, followed by the step of depositing a particulate product into the thermoformed thermoplastic material.

By forming a separable laminate with a material which is both deformable and non-gas permeable, the thin and porous infusion packet material can be thermoformed, provided the temperature of the material is maintained at a thermoforming temperature during thermoforming.

Thus, the non-gas permeable nature of the deformable material allows air pressure to be employed to carry out the thermoforming. Additionally the deformable nature of the non-gas permeable material allows moulds with a wide variety of three-dimensional steps to be used, as the deformable layer reduces stresses, particularly localised stresses induced in the thermoplastic layer during thermoforming. The deformable non-gas permeable layer thus allows air pressure and moulds to be used to thermoform the infusion packet material.

As discussed, the thermoplastic material has such a low capacity to store heat, steps must be taken to ensure that it remains heated during thermoforming.

The low heat capacity of the thermoplastic material also presents the risk of overheating during thermoforming. Thus, the present inventors have found that an effective heating method involves directing a hot gas stream onto the thermoplastic material during thermoforming.

As the primary application of the formed materials is as infusion packets, typically the material will be very thin. Thus, preferably the thermoplastic material has an average thickness of less than 0.30 mm, more preferably less than 0.20 mm, most preferably from 0.01 to 0.10 mm.

The thermoplastic material may be made from a variety of designs, but is preferably made from fibres of thermoplastic material, more particularly from woven thermoplastic fibres. Such fibres may have a diameter of less than 0.25 mm, preferably less than 0.15 mm, more preferably less than 0.10 mm, most preferably from 0.001 to 0.05 mm.

The thermoplastic material may be made from a variety of thermoformable materials, however polyethylene terephthalate (PET) and poly lactic acid (PLA) are preferred.

As discussed above, thermoforming can be carried out in a number of ways. For example, vacuum methods involving a male or female mould can be used. Alternatively a positive gas pressure can be used to form the material, optionally involving a mould.

Another possibility is that thermoforming is carried out by bringing a moving mould into contact with the separable laminate to thermoform the laminate by moving the mould to impinge into the sheet laminate. In this arrangement the deformable non-gas permeable material is in contact with the mould to reduce forming stresses in the thermoplastic material.

The deformable non-gas permeable material is typically elastically deformable, returning to a layered state after thermoforming stresses are removed. In a preferred embodiment the deformable material is an elastomer.

The non-gas permeable material should be thick enough to protect and absorb localised stresses during thermoforming. However, it should not be so thick that it reduces the ability of the infusion packet material to adopt the shape of any mould. Thus, thicknesses in the range of from 0.1 to 4.0 mm, more preferably from 0.2 to 2.0 mm are preferred.

The temperature of thermoforming is sufficient to allow the thermoplastic material to deform under thermoforming stresses. However, the temperature preferably exceeds 100°C so that the resulting material can tolerate temperatures up to this level without shrinking back to its original sheet form. More preferably the temperature exceeds 120°C, more preferably still exceeds 150°C and most preferably is from 170°C to 210°C.

The primary application of the formed materials is as infusion packets, therefore the thermoformed thermoplastic material is preferably gas and liquid permeable. In particular, it is preferred that the thermoformed thermoplastic material is permeable to aqueous liquids.

The process according to the present invention is capable of generating a wide variety of three-dimensional shapes which can then be used as infusion packet material. For example, shapes such as tetrahedral, hemispherical and the like are possible.

Thus, the process is followed by the step of depositing a particulate product, typically comprising infusible entities such as tea leaves, into the thermoformed thermoplastic material. This step is then typically followed by sealing the thermoformed material to produce a sealed porous infusion packet.

The invention will now by illustrated by way of example and with reference to the following figures, in which:
Figure 1 is a schematic representation of a separable laminate prior to being thermoformed by a process according to the present invention.
Figure 2 is a schematic representation of the separable laminate shown in figure 1 being thermoformed according to the present invention.
Figure 3 is a schematic representation of another separable laminate prior to being thermoformed by another process according to the present invention.

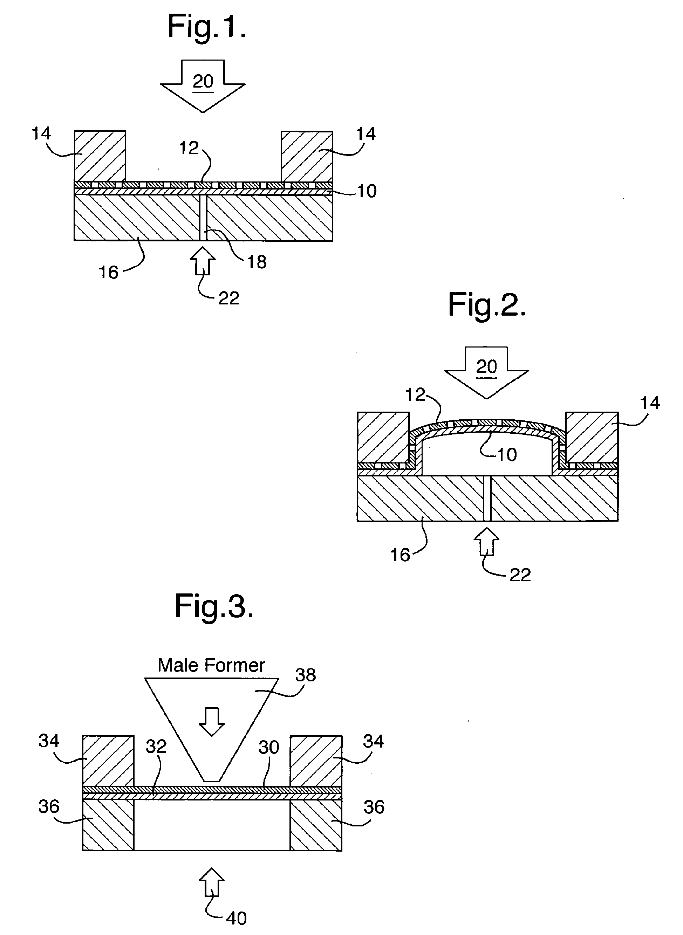

Turning to the figures, figure 1 shows a separable laminate comprising an elastomeric membrane **10** and a woven polyethylene terephthalate sheet **12**, having an average thickness of 50 micrometres.

The separable laminate is clamped by clamps **14** to a base **16** which has a channel **18** passing through to the laminate.

Air heated to 190°C is blown onto the surface of the woven sheet **12** in the direction of arrow **20** to raise it to a thermoformable temperature. At the same time thermoforming air is blown through channel 18 in the direction of arrow **22**.

As the membrane can deform elastically and the woven sheet is at a thermoformable temperature, the laminate deforms to take the shape shown in figure 2.

Once the desired shape is obtained, the hot air stream **20** is stopped so that the woven material drops below its thermoformable temperature and gas supply **22** is also stopped, to form the three-dimensional material shown in figure 2.

Figure 3 shows another separable laminate comprising an elastomeric membrane **30** and the woven polyethylene terephthalate sheet **32**, having an average thickness of 50 micrometres. The separable laminate is clamped by clamps **34** to a base **36**.

Also provided is a male mould member **38**.

Air heated to 190°C is blown onto the surface of the woven sheet **32** in the direction of arrow **40** to raise it to a thermoformable temperature.

At the same time, the male mould member **38** is moved downwards to contact and press onto the elastomeric membrane **30**. As it continues downwards, the thermoplastic woven sheet **32** thermoforms to take the shape approximately that of the male mould **38**. Even though the thermoplastic sheet is very thin, the elastomeric member **30** takes the burden of the thermoforming pressures, so that the thermoplastic sheet can take on a wide variety of shapes without failing.

## Claims

1. A process for thermoforming a gas and liquid permeable layer of thermoplastic material (**12**, **32**) having an average thickness of less than 0.50 mm, the process comprising the steps of bringing the layer into contact with a layer of deformable non-gas permeable material (**10**, **30**) to form a separable laminate of the two materials, arranging for the thermoplastic material to be at a thermoformable temperature and thermoforming the separable laminate, thereby thermoforming the thermoplastic material (**12**, **32**), followed by the step of depositing a particulate product into the thermoformed thermoplastic material.

2. A process according to claim 1, wherein the thermoplastic material (**12**, **32**) has an average thickness of less than 0.30 mm, more preferably less than 0.20 mm, most preferably less than 0.10 mm.

3. A process according to claim 1 or claim 2, wherein the thermoplastic material (**12**, **32**) is made from fibres of thermoplastic material.

4. A process according to claim 3, wherein the fibres are woven thermoplastic fibres.

5. A process according to claim 3 or claim 4, wherein the fibres have a diameter of less than 0.25 mm, preferably less than 0.15 mm, more preferably less than 0.10 mm, most preferably less than 0.05 mm.

6. A process according to any one of the preceding claims, wherein the thermoplastic material (**12**, **32**) is heated by directing a hot gas stream (**20**) onto the thermoplastic material during thermoforming.

7. A process according to any one of the preceding claims wherein thermoforming is carried out by bringing a moving mould (**38**) into contact with the separable laminate to thermoform the laminate by moving the mould (**38**) to impinge into the sheet laminate with the deformable non-gas permeable material (**10**, **30**) in contact with the mould (**38**).

8. A process according to any one of the preceding claims, wherein the deformable non-gas permeable material (**10**, **30**) is elastically deformable.

9. A process according to claim 8, wherein the deformable material is an elastomer.

10. A process according to any one of the preceding claims, wherein the temperature of thermoforming exceeds 100°C, preferably exceeds 120°C.

11. A process according to any one of the preceding claims, wherein the thermoplastic material is formed into a tetrahedral or hemispherical shape.

12. A process according to any one of the preceding claims, wherein the particulate product comprises infusible entities such as tea leaves.

13. A process according to claim 12, which is followed by sealing the thermoformed material to produce a sealed porous infusion packet.

## Patentansprüche

1. Prozess zum Thermoformen einer gas- und flüssigkeitsdurchlässigen Schicht aus thermoplastischem Material (**12**, **32**), die eine mittlere Dicke von weniger als 0,50 mm aufweist, wobei der Prozess die Schritte des Bringens der Schicht in Kontakt mit einer Schicht aus verformbarem nicht gasdurchlässigen Material (**10**, **30**), um ein trennbares Laminat der zwei Materialien zu bilden, des Anordnens des thermoplastischen Materials, so dass es bei einer thermoformbaren Temperatur ist, und des Thermoformens des trennbaren Laminats und dadurch des Thermoformens des thermoplastischen Materials (**12**, **32**), gefolgt von dem Schritt des Einbringens eines partikelförmigen Produkts in das thermogeformte thermoplastische Material, umfasst.

2. Prozess nach Anspruch 1 wobei das thermoplastische Material (**12**, **32**) eine mittlere Dicke von weniger als 0,30 mm, vorzugsweise weniger als 0,20 mm, besonders bevorzugt weniger als 0,10 mm aufweist.

3. Prozess nach Anspruch 1 oder Anspruch 2, wobei das thermoplastische Material (**12**, **32**) aus Fasern aus thermoplastischem Material hergestellt ist.

4. Prozess nach Anspruch 3, wobei die Fasern ein Gewebe aus thermoplastischen Fasern sind.

5. Prozess nach Anspruch 3 oder Anspruch 4, wobei die Fasern einen Durchmesser von weniger als 0,25 mm, vorzugsweise weniger als 0,15 mm, stärker bevorzugt weniger als 0,10 mm und besonders bevorzugt weniger als 0,05 mm aufweisen.

6. Prozess nach einem der vorhergehenden Ansprüche, wobei das thermoplastische Material (**12**, **32**) durch Lenken einer heißen Gasströmung (**20**) auf das thermoplastische Material während des Thermoformens erwärmt wird.

7. Prozess nach einem der vorhergehenden Ansprüche, wobei das Thermoformen durch Bringen einer sich bewegenden Form (**38**) in Kontakt mit dem trennbaren Laminat ausgeführt wird, um das Laminat durch Bewegen der Form, so dass sie auf die Laminatplatte auftrifft, thermisch zu formen, wobei das verformbare nicht gasdurchlässige Material (**10**, **30**) in Kontakt mit der Form (**38**) ist.

8. Prozess nach einem der vorhergehenden Ansprüche, wobei das verformbare nicht gasdurchlässige Material (**10**, **30**) elastisch verformbar ist.

9. Prozess nach Anspruch 8, wobei das verformbare Material ein Elastomer ist.

10. Prozess nach einem der vorhergehenden Ansprüche, wobei die Temperatur der Thermoformung 100 °C, vorzugsweise 120 °C, übersteigt.

11. Prozess nach einem der vorhergehenden Ansprüche, wobei das thermoplastische Material in eine tetraederförmige oder hemisphärische Form gebildet wird.

12. Prozess nach einem der vorhergehenden Ansprüche, wobei das partikelförmige Produkt aufgießbare Objekte wie z. B. Teeblätter umfasst.

13. Prozess nach Anspruch 12, dem das Abdichten des thermogeformten Materials folgt, um ein abgedichtetes poröses Aufgusspaket zu produzieren.

## Revendications

1. Procédé de thermoformage d'une couche perméable au gaz et au liquide de matériau thermoplastique (**12**, **32**) présentant une épaisseur moyenne inférieure à 0,50 mm, le procédé comprenant les étapes de mise en contact de la couche avec une couche de matériau non perméable au gaz déformable (**10**, **30**) pour former un stratifié séparable des deux matériaux, de disposition du matériau thermoplastique pour qu'il soit à une température thermoformable et de thermoformation du stratifié séparé, thermoformant par-là le matériau thermoplastique (**12**, **32**), suivies par l'étape de dépôt d'un produit particulaire dans le matériau thermoplastique thermoformé.

2. Procédé selon la revendication 1, dans lequel le matériau thermoplastique (**12**, **32**) présente une épaisseur moyenne inférieure à 0,30 mm, encore mieux inférieure à 0,20 mm, bien mieux encore inférieure à 0,10 mm.

3. Procédé selon la revendication 1 ou la revendication 2, dans lequel le matériau thermoplastique (**12**, **32**) est constitué de fibres de matériau thermoplastique.

4. Procédé selon la revendication 3, dans lequel les fibres sont des fibres thermoplastiques tissées.

5. Procédé selon la revendication 3 ou la revendication 4, dans lequel les fibres présentent un diamètre inférieur à 0,25 mm, de préférence inférieur à 0,15 mm, encore mieux inférieur à 0,10 mm, bien mieux encore inférieur à 0,05 mm.

6. Procédé selon l'une quelconque des revendications précédentes, dans lequel le matériau thermoplastique (**12**, **32**) est chauffé en dirigeant un courant de gaz chaud (**20**) sur le matériau thermoplastique pendant le thermoformage.

7. Procédé selon l'une quelconque des revendications précédentes, dans lequel le thermoformage est réalisé en mettant un moule mobile (**38**) en contact avec le stratifié séparable pour thermoformer le stratifié par déplacement du moule (**38**) pour qu'il heurte dans le stratifié de feuille avec le matériau non perméable au gaz déformable (**10**, **30**) en contact avec le moule (**38**).

8. Procédé selon l'une quelconque des revendications précédentes, dans lequel le matériau non perméable au gaz déformable (**10**, **30**) est élastiquement déformable.

9. Procédé selon la revendication 8, dans lequel le matériau déformable est un élastomère.

10. Procédé selon l'une quelconque des revendications précédentes, dans lequel la température de thermoformage excède 100°C, de préférence excède 120°C.

11. Procédé selon l'une quelconque des revendications précédentes, dans lequel le matériau thermoplastique est formé dans une forme tétraédrique ou hémisphérique.

12. Procédé selon l'une quelconque des revendications précédentes, dans lequel le produit particulaire comprend des entités infusibles, telles que des feuilles de thé.

13. Procédé selon la revendication 12, lequel est suivi par un scellement du matériau thermoformé pour produire un paquet d'infusion poreux scellé.
